(19) **Europäisches Patentamt**
**European Patent Office**
**Office européen des brevets**

(11) **EP 2 863 175 B1**

(12) **EUROPEAN PATENT SPECIFICATION**

(45) Date of publication and mention
of the grant of the patent:
**18.04.2018 Bulletin 2018/16**

(51) Int Cl.:
***G01C 3/08*** *(2006.01)*   ***G01S 17/06*** *(2006.01)*
***G01B 11/02*** *(2006.01)*

(21) Application number: **13189269.7**

(22) Date of filing: **18.10.2013**

(54) **Method and device for measuring an area of a target surface**

Verfahren und Vorrichtung zur Messung eines Zielflächeninhaltes

Procédé et dispositif pour mesurer une aire d'une surface cible

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.04.2015 Bulletin 2015/17**

(73) Proprietor: **Techtronic Power Tools Technology Limited**
**Road Town, Tortola (VG)**

(72) Inventors:
• **Yu-Cheng, Li**
**Taichung (TW)**
• **Hudry Von Vopelius, Christophe Laurent**
**90762 Fürth (DE)**
• **Lerch, Oliver**
**Bourne End (GB)**

• **Lam, Kwok Fan**
**Tsuen Wan**
**New Territories (HK)**
• **Li, Kok Lun**
**Tsuen Wan**
**New Territories (HK)**
• **Chipner, Todd Michael**
**Tsuen Wan**
**New Territories (HK)**

(74) Representative: **Stevenson-Hill, Jack Patrick**
**Marks & Clerk LLP**
**1 New York Street**
**Manchester M1 4HD (GB)**

(56) References cited:
**EP-A1- 2 645 056      WO-A1-2011/078838**
**DE-A1- 19 836 812      US-A1- 2008 088 817**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a method for measuring an area of a target surface, and particularly, although not exclusively to a method for measuring an area of a wall using laser signals.

BACKGROUND

Various mathematical formulas and equations have been devised for calculating areas of different shapes and forms. For example, to solve for an area of a rectangle in a mathematical problem, one may use the length of its height and base. On the other hand, to solve for a surface area of a sphere in a mathematical problem, one may utilize the length of its radius. Theoretically, areas of all shapes and forms can be calculated using one or the other mathematical methods such as geometric equations or integration and differentiation methods.

When it comes to measuring the area of a target surface in real life, one may use different measurement tools to obtain the basic dimension (one-dimensional information such as length, width, height) measurements before applying the above mathematical methods. For example, to measure an area of a rectangular sheet of paper, one may first have to use a ruler to measure the length and the width of the paper, and then apply mathematical formulas to calculate its area.

However, in some practical situations, area measurement may not be as straightforward as described above. For example, if one wishes to paint a wall or a ceiling in his house, he will first need to know the area of the ceiling or wall in order to determine the amount of paint that is required. In order to measure the surface area of the ceiling or wall, he will need to measure the different dimensions such as length, width and/or height of the ceiling or wall. However, often times, the ceiling or wall is out of reach and the dimension of the ceiling or wall is prohibitively large such that no measurement tools can be readily used to measure these dimensions. And because of this, he cannot obtain a direct and accurate measurement of these parameters and hence he cannot determine the area and the amount of paint required.

EP2645056 relates to a telemetric measuring method and range finder for measuring distances, lengths, surface areas and levels. According to the abstract of this document the method disclosed within this document involves generating or determining two sight lines towards two target points unspecified in space, using a reference source attached to a range finder. An aperture between the lines is validated and stored. Distance to measure an angle is calculated. Spatial distance between the target points is calculated to determine pitching angles and rolling angles by applying a rule of sines or a law of cosines for a controller unit. A misalignment of a segment on a horizontal or on a vertical gravity is deduced.

US 2008/088817 relates to a method for measurement of a line. According to the abstract of this document, there is provided an optical distance measurement method, whereby an input means of a distance measuring device is operated, which triggers a measuring sequence of distance measurements, during which individual measurements of distances from the distance measuring device triggered by the distance measuring device are carried out perpendicular to the line for measurement. At least one maximum value and at least one minimum value of the distances are determined from the measuring sequence and the length of the line determined from the at least one maximum value and the at least one minimum value. The document further relates to a distance measuring device, in particular, a hand-held measuring device for carrying out said method.

DE19836812 relates to a device having an integrated computer for measurement data evaluation. According to the abstract of this document there are provided simple-to-follow measuring routines which are stored in the computer memory, for solving use-related measurement tasks, which are reproducible on an indicating panel and can be called up by pressing a button of the keyboard. There is further provided a method for using the device.

SUMMARY OF THE INVENTION

In accordance with a first aspect of the present invention, there is provided a method for measuring an area of a target surface using a signal generating device, the method being in accordance with claim 1 and comprising the steps of generating a plurality of signals in the signal generating device; transmitting the plurality of signals from the signal generating device to a plurality of points on and outside the target surface; receiving the plurality of signals reflected from each of the plurality of points on and outside the target surface so as to determine a plurality of distances between the signal generating device and the plurality of points on and outside the target surface; and calculating the area of the target surface based on parameters derived from the plurality of distances between the signal generating device and the plurality of points on and outside the target surface.

The method further comprises the steps of deriving a plurality of parameters associated with a geometry of the area of the target surface based on the plurality of distances between the signal generating device and the plurality of points on and outside the target surface; and using the plurality of parameters derived to calculate the area of the target surface.

In an embodiment of the first aspect, the signal generating device is operable in a plurality of measurement modes, and each of the plurality of measurement modes are arranged to determine the plurality of parameters associated with the geometry of the area of the target surface to be measured.

In an embodiment of the first aspect, each of the plurality of measurement modes is associated with a different target surface area measurement method.

In an embodiment of the first aspect, the signal generating device is initially arranged to operate in a default measurement mode.

In an embodiment of the first aspect, the method further comprises the step of selecting a measurement mode different from the default measurement mode from the plurality of measurement modes prior to transmitting the plurality of signals when a desired target surface area measurement method is different from a default target surface area measurement method associated with the default measurement mode.

The number of the plurality of points on and outside the target surface is greater than three.

The plurality of points on and outside the target surface comprises at least two points on edges of the target surface.

The plurality of points on and outside the target surface comprises at least three points outside the target surface.

In an embodiment of the first aspect, the plurality of points on and outside the target surface further comprises at least one point on the target surface away from all edges of the target surface.

In an embodiment of the first aspect, the plurality of parameters associated with the geometry of the area of the target surface comprises at least one of a height, a partial height, an extended height, a width, a partial width, an extended width, a hypotenuse or a partial hypotenuse of the target surface.

In an embodiment of the first aspect, the method further comprises the step of displaying each of the plurality of parameters derived on a display means of the signal generating device after deriving each of the plurality of parameters at the signal generating device.

In an embodiment of the first aspect, the method further comprises the step of storing each of the plurality of parameters derived in a memory module of the signal generating device after deriving each of the plurality of parameters at the signal generating device.

In an embodiment of the first aspect, the method further comprises the step of displaying the calculated area of the target surface on a display means of the signal generating device after calculating the area of the target surface.

In an embodiment of the first aspect, the method further comprises the step of storing the calculated area of the target surface in a memory module of the signal generating device after calculating the area of the target surface.

In an embodiment of the first aspect, the method further comprises the step of displaying a power indicator indicating a power status of the signal generating device on a display means of the signal generating device.

In an embodiment of the first aspect, the method further comprises the step of displaying a measurement mode indicator indicating the measurement mode selected on a display means of the signal generating device.

In an embodiment of the first aspect, wherein the measurement mode indicator is further arranged to indicate a parameter associated with the geometry of the area of the target surface to be measured on a display means of the signal generating device each time prior to transmitting each of the plurality of signals from the signal generating device to the plurality of points on and outside the target surface.

In an embodiment of the first aspect, the measurement mode indicator is updated based on an algorithm of the measurement mode selected each time prior to transmitting each of the plurality of signals from the signal generating device to the plurality of points on and outside the target surface.

In an embodiment of the first aspect, the method further comprises the step of displaying a measurement guidance indicator arranged to indicate one or more parameters associated with the geometry of the area of the target surface that have been measured.

The calculation of the area of the target surface is automatic.

The derivation of at least some of the plurality of parameters associated with the geometry of the area is automatic.

The plurality of points on and outside the target surface together defines a plane.

In an embodiment of the first aspect, the target surface is a surface of a wall.

In an embodiment of the first aspect, the area of the wall surface is substantially rectangular or squared.

In an embodiment of the first aspect, the signal generating device is a laser generating device arranged to generate and communicate laser signals.

In an embodiment of the first aspect, the signal generating device is arranged to measure the area of the target surface using at least one measurement mode.

In an embodiment of the first aspect, the method further comprises the steps of: selecting a measurement mode from the plurality of measurement modes each time prior to transmitting a signal from the signal generating device to a point on or outside the target surface; and calculating the area of the target surface using the plurality of parameters associated with the geometry of the area of the target surface derived from the at least one measurement mode.

In accordance with a second aspect of the present invention, there is provided a signal generating device arranged to measure an area of a target surface according to claim 14, wherein the signal generating device comprises a signal generator arrange to generate a plurality of signals; a transceiver arranged to transmit the plurality of signals from the signal generating device to a plurality of points on and outside the target surface and receive the plurality of signals reflected from each of the plurality of points on and outside the target surface so as to determine a plurality of distances between the signal generating device and the plurality of points on and outside the target surface; and a processor arranged to calculate the area of the target surface based on parameters derived from the plurality of distances between the signal generating device and the plurality of points on and outside the target surface.

The processor of the signal generating device is further arranged to derive a plurality of parameters associated with a geometry of the area of the target surface based on the plurality of distances between the signal generating device and the plurality of points on and outside the target surface; and calculate the area of the target surface using the plurality of parameters derived.

In an embodiment of the second aspect, the signal generating device is operable in a plurality of measurement modes, and each of the plurality of measurement modes are arranged to determine the plurality of parameters associated with the geometry of the area of the target surface to be measured.

In an embodiment of the second aspect, each of the plurality of measurement modes is associated with a different target surface area measurement method.

In an embodiment of the second aspect, the signal generating device is initially arranged to operate in a default measurement mode.

In an embodiment of the second aspect, the signal generating device further comprises a selection means accessible by a user, the selection means is arranged for a user to select a measurement mode different from the default measurement mode from the plurality of measurement modes prior to transmitting the plurality of signals when a desired target surface area measurement method is different from a default target surface area measurement method associated with the default measurement mode.

The number of the plurality of points on and outside the target surface is greater than three. The plurality of points on and outside the target surface comprises at least two points on edges of the target surface.

The plurality of points on and outside the target surface comprises at least three points outside the target surface.

In an embodiment of the second aspect, the plurality of points on and outside the target surface further comprises at least one point on the target surface away from all edges of the target surface.

In an embodiment of the second aspect, the plurality of parameters associated with the geometry of the area of the target surface comprises at least one of a height, a partial height, an extended height, a width, a partial width, an extended width, a hypotenuse or a partial hypotenuse of the target surface.

In an embodiment of the second aspect, the signal generating device further comprises a display means arranged to display each of the plurality of parameters derived after deriving each of the plurality of parameters at the signal generating device.

In an embodiment of the second aspect, the signal generating device further comprises a memory means arranged to store each of the plurality of parameters derived after deriving each of the plurality of parameters at the signal generating device.

In an embodiment of the second aspect, the display means of the signal generating device is further arranged to display the calculated area of the target surface after calculating the area of the target surface.

In an embodiment of the second aspect, the memory means of the signal generating device is further arranged to store the calculated area of the target surface after calculating the area of the target surface.

In an embodiment of the second aspect, the display means of the signal generating device is further arranged to display a power indicator indicating a power status of the signal generating device.

In an embodiment of the second aspect, the display means of the signal generating device is further arranged to display a measurement mode indicator indicating the measurement mode selected.

In an embodiment of the second aspect, the measurement mode indicator is further arranged to indicate a parameter associated with the geometry of the area of the target surface to be measured on a display means of the signal generating device each time prior to transmitting each of the plurality of signals from the signal generating device to the plurality of points on or outside the target surface.

In an embodiment of the second aspect, the measurement mode indicator is updated based on an algorithm of the measurement mode selected each time prior to transmitting each of the plurality of signals from the signal generating device to the plurality of points on or outside the target surface.

In an embodiment of the second aspect, the display means of the signal generating device is further arranged to display a measurement indicator arranged to indicate one or more parameters associated with the geometry of the area of the target surface that have been measured.

The calculation of the area of the target surface is automatic.

The derivation of at least some of the plurality of parameters associated with the geometry of the area is automatic.

The plurality of points on and outside the target surface together defines a plane.

In an embodiment of the second aspect, the target surface is a surface of a wall.

In an embodiment of the second aspect, the area of the wall surface is substantially rectangular or squared.

In an embodiment of the second aspect, the signal generating device is a laser generating device arranged to generate and communicate laser signals.

In an embodiment of the second aspect, the signal generating device is arranged to measure the area of the target surface using at least one measurement mode.

In an embodiment of the second aspect, the selection means is further arranged for a user to select a measurement mode from the plurality of measurement modes each time prior to transmitting a signal from the signal generating device to a point on or outside the target surface; and the processor is further arranged to calculate the area of the target surface using the plurality of parameters associated with the geometry of the area of the target surface derived from the at least one measurement mode.

BRIEF DESCRIPTION OF THE DRAWINGS

Embodiments of the present invention will now be described, by way of example, with reference to the accompanying drawings in which:

Figure 1 shows a method for measuring an area of a target surface using a signal generating device in accordance with one embodiment of the present invention and the operation of the signal generating device during the area measurement process;

Figure 2A shows a measurement mode of the signal generating device of Figure 1;

Figure 2B shows the operation of the signal generating device during the measurement process in the measurement mode of Figure 2A;

Figure 2C shows the formulas for calculating the area of the target surface in the measurement mode of Figure 2A;

Figure 3A shows a measurement mode of the signal generating device of Figure 1;

Figure 3B shows the operation of the signal generating device during the measurement process in the measurement mode of Figure 3A;

Figure 3C shows the formulas for calculating the area of the target surface in the measurement mode of Figure 3A;

Figure 4A shows an embodiment of a measurement mode of the signal generating device of Figure 1 in accordance with the present invention;

Figure 4B shows the operation of the signal generating device during the measurement process in the measurement mode of Figure 4A;

Figure 4C shows the formulas for calculating the area of the target surface in the measurement mode of Figure 4A; and

Figure 5 shows a further embodiment of the measurement mode (hybrid measurement mode) of the signal generating device of Figure 1.

DETAILED DESCRIPTION OF THE PREFERRED EMBODIMENT

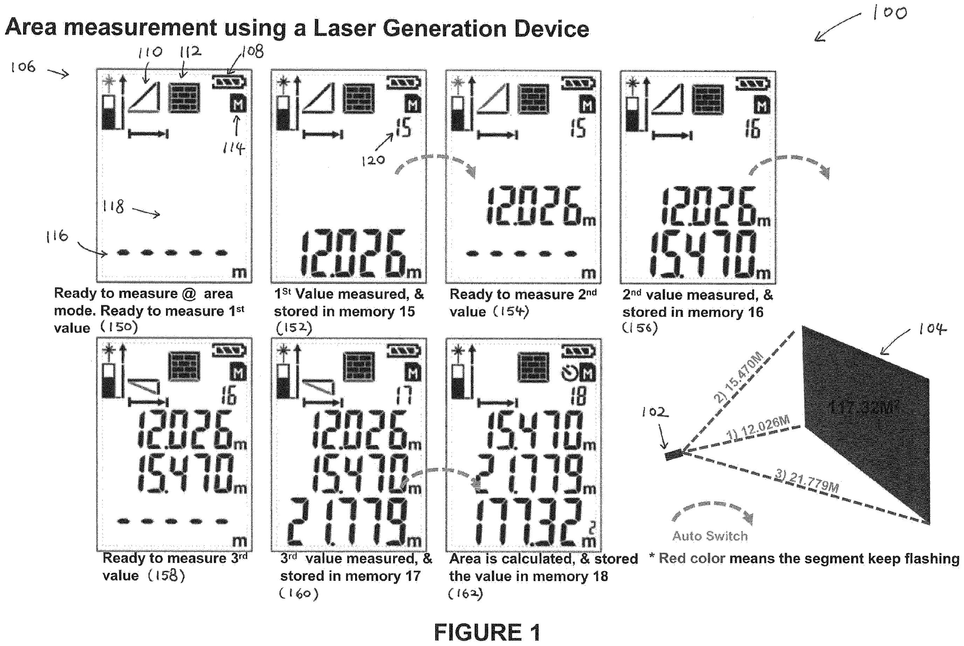

Referring to Figure 1, there is illustrated a method for measuring an area of a target surface using a signal generating device, the method comprising the steps of generating a plurality of signals in the signal generating device; transmitting the plurality of signals generated from the signal generating device to a plurality of points on or outside the target surface; receiving the plurality of signals reflected from each of the plurality of points on or outside the target surface so as to determine a plurality of distances between the signal generating device and the plurality of points on or outside the target surface; and calculating the area of the target surface based on parameters derived from the plurality of distances between the signal generating device and the plurality of points on or outside the target surface.

In one embodiment, the signal generating device 102 is arranged to measure an area of a rectangular target surface 104. However, in other embodiments, the signal generating device 102 may be arranged to measure a target surface area of any other shape and form. Preferably, the target surface 104 is planar and has a substantially quadrilateral shape such as but not limited to a squared or a rectangular shape. In application, the target surface 104 may be a surface of a floor, a wall, a ceiling, or any object of interest.

In this embodiment, the signal generating device 102 is a laser generating device arranged to generate and communicate laser signals. However, in other embodiments, the signal generating device 102 may be a device operable to generate and communicate optical, electromagnetic or sound wave signals. Preferably, the signal generating device 102 is a handheld type and is powered by batteries. In some embodiments, the signal generating device 102 may be powered by the mains. In a preferred embodiment, the signal generating device 102 is sized such that it is light and handy and can be readily carried around by the user.

Figure 1 shows a method 100 for measuring an area of a target surface 104 using a laser generating device 102, and the operation of the laser generating device 102 during the area measurement process. To measure a target surface area, a user first activates (power-on) the laser generating device 102 which comprises a processor. Upon start-up, the laser generating device 102 provides various indicators associated with the status and operation modes of the device on its display 106. These indicators may include a power indicator 108, a measurement mode indicator 110, a measurement indicator 112, a memory indicator 114, etc. In some embodiments, the display 106 of the device is touch sensitive, i.e. a touch screen.

Preferably, the power indicator 108 indicates the amount of power remaining in the laser generating device 102. In particular when the power of the device 102 is low, the power indicator 108 may provide visual, audible or vibration indicating signals to remind the user to replace the battery. The measurement mode indicator 110 relates to a measurement mode arranged to measure the area of the target surface 104. The user of the device 102 may select different measurement modes that utilize different measurements for calculating the target surface area. These different measurement modes with different target surface area measurement methods will be described in further detail below. In one embodiment, the laser generating device 102 has a default measurement mode that calculates the target surface area by measuring three points on the edges on the target surface 104. Preferably, the measurement mode indicator 110 is also arranged to guide the user through the area measurement process. In one embodiment, the measurement mode indicator 110 may remind to the user which measurement to take according to the measurement mode selected in a step-by step manner. Preferably, the measurement mode indicator 110 is a visual or audible cue provided to the user. The measurement indicator 112 may indicate the measurements that have already been taken to further aid the user. Similarly, the measurement indicator 112 may also be visual or audible cues provided to the user. The memory indicator 114 indicates the memory status of the device 102. Preferably, the laser generating device 102 may provide visual, audible or vibration signals to the user when the memory of the device 102 is full so that the user may take necessary actions to free up the memory space for further measurements.

Although a number of specific indicators of the laser generating device 102 have been described above, it should be noted that some of these indicators may be removed whilst some other forms of indicators or indicating signals may be provided by the laser generating device 102 to improve the function and efficiency of the device without deviating from the present invention.

Referring back to Figure 1, as shown in (150), a user first turns on the laser generating device 102. Then, the user selects a target surface area measurement mode from different preset target surface area measurement modes by actuating a selection means such as an actuator provided on the device 102. The measurement mode indicator 110 indicates the measurement mode selected by the user. In this particular measurement mode, a default measurement mode (target surface area calculated by measuring three points on the corners on the target surface 104) is selected.

In this measurement mode, after deciding on the measurement mode to use and with the help of the measurement mode indicator 110, the user first actuates the laser generating device 102 to generate a laser signal and transmits the laser signal from the laser generating device 102 to a bottom left corner of the target surface of which the area is to be measured 104. The laser generating device 102 then receives the laser signal reflected from the bottom left corner of the target surface 104. As the speed of the laser signal transmitted is known, the laser generating device 102 can determine the distance between the device 102 and the bottom left corner of the target surface 104 based on the time difference between the transmission and the receiving of the laser signal.

Upon determining and calculating this first distance, as shown in (152), the laser generation device 102 displays a numerical value of the first distance on a display column 116 and stores this value in the memory of the device 102. After that, as shown in (154), the value of the first distance is automatically moved to a memory column 118 so that the display column 116 is cleared and the device 102 is ready for the second measurement. In some measurement modes, the memory count 120 on the display 106 will be automatically incremented to indicate that the measured value has been successfully stored in the memory.

Next, as shown in (154), according to the measurement method of the measurement mode selected, the measurement mode indicator 110 will be automatically updated to indicate to the user where to transmit the next laser signal in order to take the next measurement. In this case, the user transmits the laser signals to the top left corner of the target 104 by actuating the laser generating device 102 to generate a laser signal and transmits the laser signal from the laser generating device to a top left corner of the target surface 104 of which the area is to be measured. The laser generating device 102 then receives the laser signal reflected from the top left corner of the target surface 104. As the speed of the laser signal transmitted is known, the laser generating device 102 can determine the distance between the device 102 and the top left corner of the target surface 104 based on the time difference between the transmission and the receiving of the laser signal.

Upon determining and calculating this second distance, as shown in (156), the laser generation device 102 displays a numerical value of the second distance on a display column 116 and stores this value in the memory. After that, as shown in (158), the value of the second distance is automatically moved to a memory column 118 so that the display column 116 is cleared and the device 102 is ready for the third measurement. As described above, in some measurement modes, the memory count on the display 106 will be automatically incremented to indicate that the value has been successfully stored in the memory of the device 102.

Again, based on the measurement method of the measurement mode selected, the measurement mode indicator 110 will indicate to the user where to transmit laser signals in order to take the next measurement. In this case, the user actuates the laser generating device 102 to generate a laser signal and transmits the laser signal from the laser generating device 102 to a bottom right corner of the target surface 104 of which the area is to be measured. The laser generating device 102 then receives the laser signal reflected from the bottom right corner of the target surface 104. As the speed of the laser signal transmitted is known, the laser generating device 102 can determine the distance between the device 102 and the bottom right corner of the target surface 104 based on the time difference between the transmission and the receiving of the laser signal.

Upon determining and calculating this third distance, as shown in (160), the laser generation device 102 displays a numerical value of the third distance on a display column 116 and the device 102 stores this value in the memory. Afterwards, the value of the third distance is automatically moved to a memory column 118 so that the display column 116 is cleared.

Based on the values of the three distances measured, the laser generating device automatically calculates the area of the target surface 104 according to the algorithm associated with the measurement mode selected. As shown in (162), the device 102 then displays the final calculated target surface area on the display column 116 of the display 106 and stores this calculated value in the memory. Again in the above processes, the memory count on the display 106 will be automatically incremented to indicate that the third value and the final calculated value of the area have been successfully stored in the memory of the device 102.

Although this present embodiment has been described in detail with reference to Figure 1, it should be noted that the layout on the display 106 and the information displayed on the display 106 in the different operation steps could be modified without departing from the scope of the present invention. For example, in some other embodiments, the display 106 of the device 102 may not show any of the distance values measured throughout the process but only the final calculated area of the target surface 104. In some other cases, the device 102 may operate automatically or may only operate in response to the user's command.

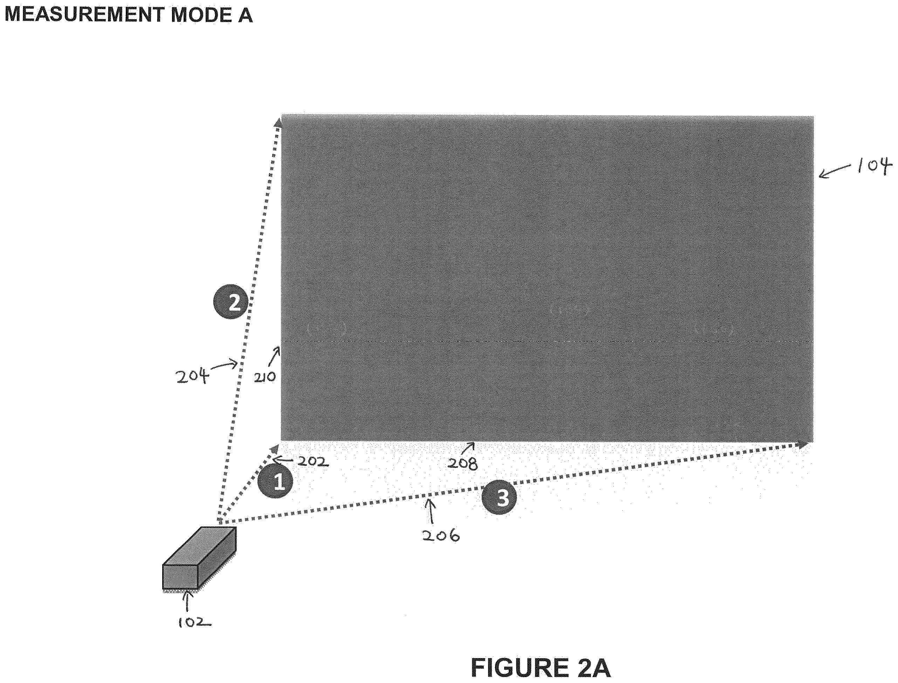

Referring now to Figures 2A-2C, there is shown a first measurement mode of the signal generating device 102 of Figure 1. As shown in Figure 2A, in this measurement mode, three distance measurements between the device 102 and the target surface 104 are required for calculating the area of the target surface 104. In this measurement mode, preferably, the device 102 is placed in a position such that the line 202 of the first distance between the device 102 and the bottom left corner of the target surface 104, the bottom edge 208 of the target surface 104, and the left edge 210 of the target surface 104 is substantially orthogonal to each other. In other measurement modes, the device 102 may be placed in any positions as desired.

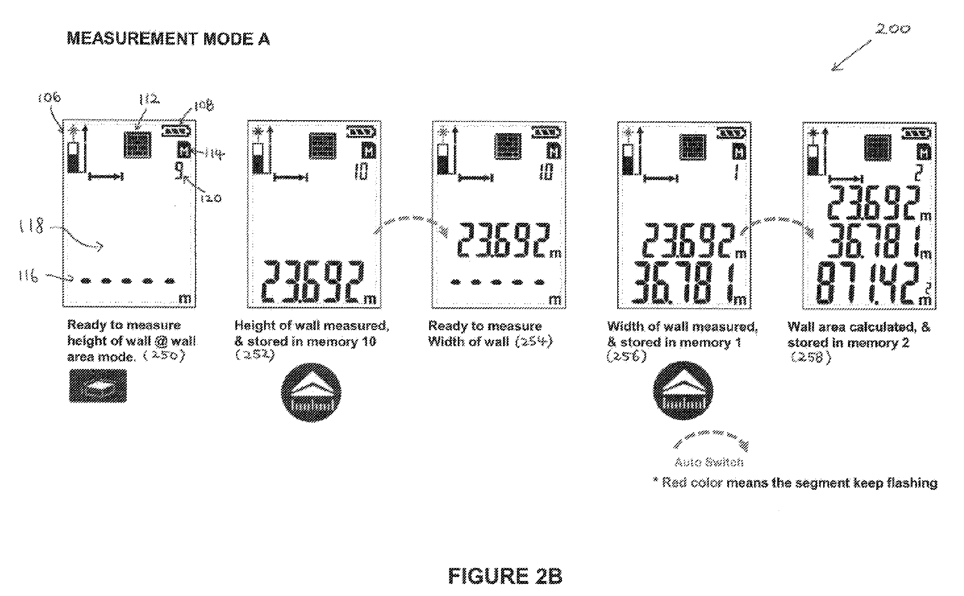

Figure 2B shows the operation of the signal generating device 102 during the measurement process 200 in the measurement mode of Figure 2A. The operation processes 200 shown in Figure 2B is similar to that described above with reference to Figure 1.

In this measurement mode, the user first powers on the device 102. Then, as shown in (250), the user selects the measurement mode of Figure 2A using an actuating means of the device 102. For example, this actuating means may be, but not limited to, a button or a knob. In some cases, the display 106 may be touch-sensitive and no actuators are provided on the device 102. After selecting the desired measurement mode, the measurement mode indicator 110 will guide the user to measure a first distance between the device 102 and the bottom left corner of the target surface 104. The user actuates the device 102 and transmits laser signals to the bottom left corner of the target surface 104. The device 102 then receives the signal reflected back from the bottom left corner of the target surface 104 and determines the first distance between the device 102 and the bottom left corner of the target surface 104. In this measurement mode, the value of the first distance 202 will be stored in the memory of the device 102 but may or may not be shown in the display column 116 on the display 106 of the device 102. Accordingly, the memory count 120 on the display 106 may be incremented to indicate the successful storage of the value.

Upon determining the first distance 202, the measurement mode indicator 110 is updated to indicate to the user that a second distance 204 between the device 102 and the top left corner of the target surface 104 is to be measured. Similarly, the user actuates the device 102 and transmits laser signals to the top left corner of the target surface 104. The device 102 then receives the signal reflected back from the top left corner of the target surface 104 and determines the second distance 204 between the device 102 and the top left corner of the target surface 104.

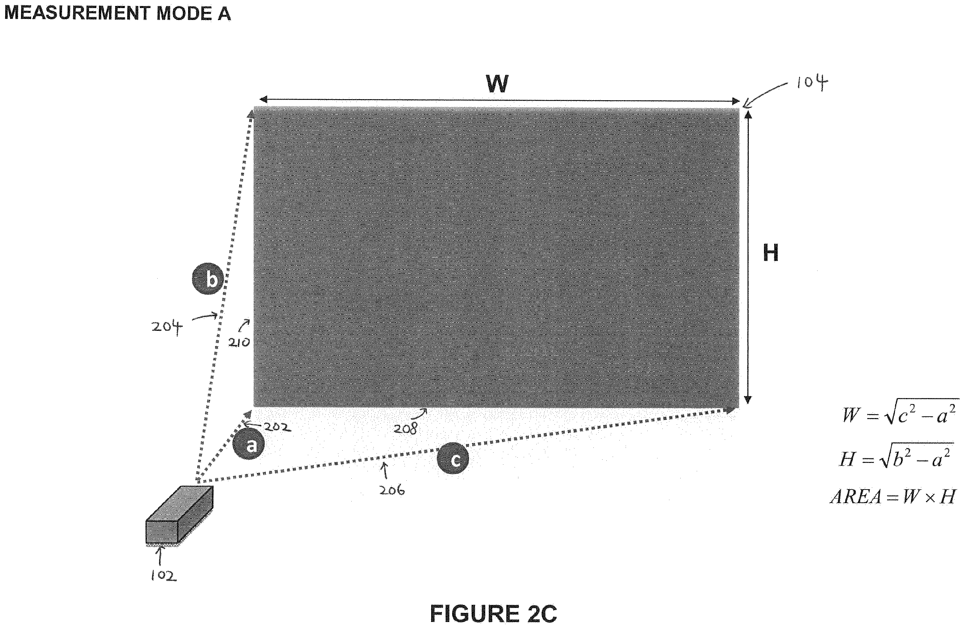

Upon determining the second distance 204, the device then calculates the height of the target surface 104 based on the first and second distances 202, 204. Referring to Figure 2C, there is shown a formula for calculating the value of the height of the target surface:

$$H = \sqrt{b^2 - a^2}$$

where H is the height of the target surface, a is the value of the first distance 202 and b is the value of the second distance 204.

In this measurement mode, as shown in (252), the height calculated is displayed on the display column 116 of the device 102 and is stored in the memory. When the device 102 is ready for the next measurement, as shown in (254), the value of the height calculated moves to the memory column 118 and the display column 116 on the display 106 is emptied. In one measurement mode, the measurement indicator 112 shows the measurements that have been taken by the device 102.

Next, the measurement mode indicator 110 is updated and indicates the user to measure a third distance 206 between the device 102 and the bottom right corner of the target surface 104. Similarly, the user actuates the device 102 and transmits laser signals to the bottom right corner of the target surface 104. The device 102 then receives the signal reflected back from the bottom right corner of the target surface 104 and determines the third distance 206 between the device 102 and the bottom right corner of the target surface 104.

Upon determining the third distance 206, the device 102 then calculates the width of the target surface 104 based on the first and third distances 202, 206. Referring to Figure 2C, there is shown a formula for calculating the value of the width of the target surface 104:

$$W = \sqrt{c^2 - a^2}$$

where W is the width of the target surface 104, a is the value of the first distance 202 and c is the value of the third distance 206.

Then as shown in (256), the width calculated is displayed on the display column 116 and stored in the memory. With these two values (width and height), the device 102 automatically calculates the area of the target surface 104 by multiplying the width and the height calculated. As shown in (258), the final calculated area is then displayed on the display column 116 of the display 106 and the final calculated area value is stored in the memory of the device 102.

Although this present measurement mode has been described in detail with reference to Figures 2A-2C, it should be noted that the layout on the display 106 and the information displayed on the display 106 in the different operation steps could be modified without departing from the present measurement mode. For example, some of the features described with reference to Figure 1 can be incorporated to the present measurement mode. In some cases, contrary to the present measurement mode, the height of the target surface 104 can be calculated after the width of the target surface 104 has been determined. Also, it should be appreciated that the user of the device 102 may choose any three corners of the target surface 104 for using this measurement mode to measure the target surface area.

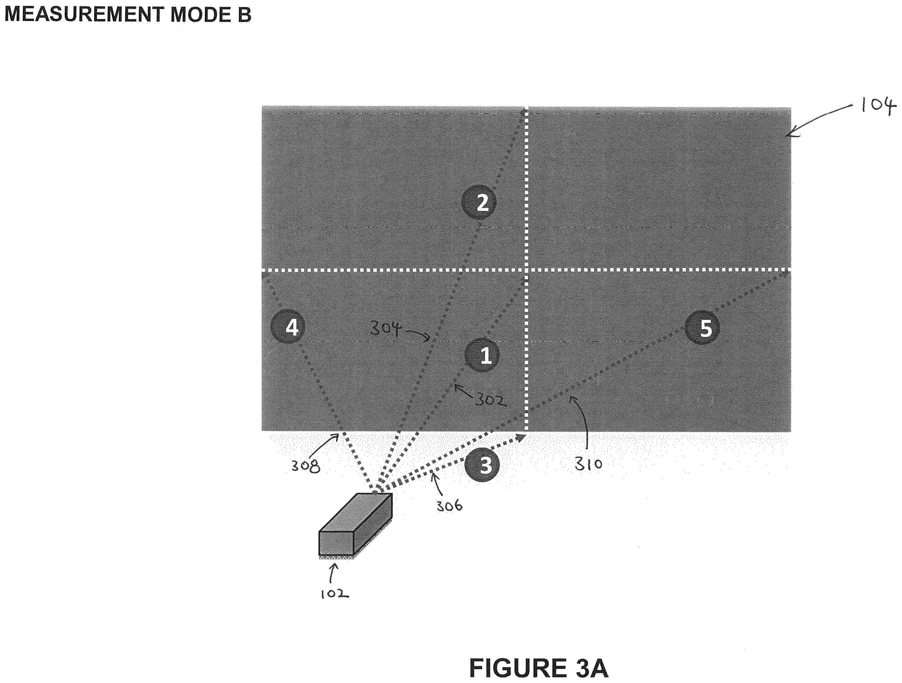

Figures 3A-3C show a second measurement mode of the signal generating device 102 of Figure 1. As shown in Figure 3A, in this measurement mode, five distance measurements between the device 102 and the target surface 104 are required for calculating the area of the target surface 104. In this measurement mode, preferably, the device 102 is placed in a position such that the line 302 of the first distance between the device 102 and a point on the target area 104 is substantially orthogonal to the plane of the target surface 104. In other measurement modes, the device 102 may be placed in any positions as desired.

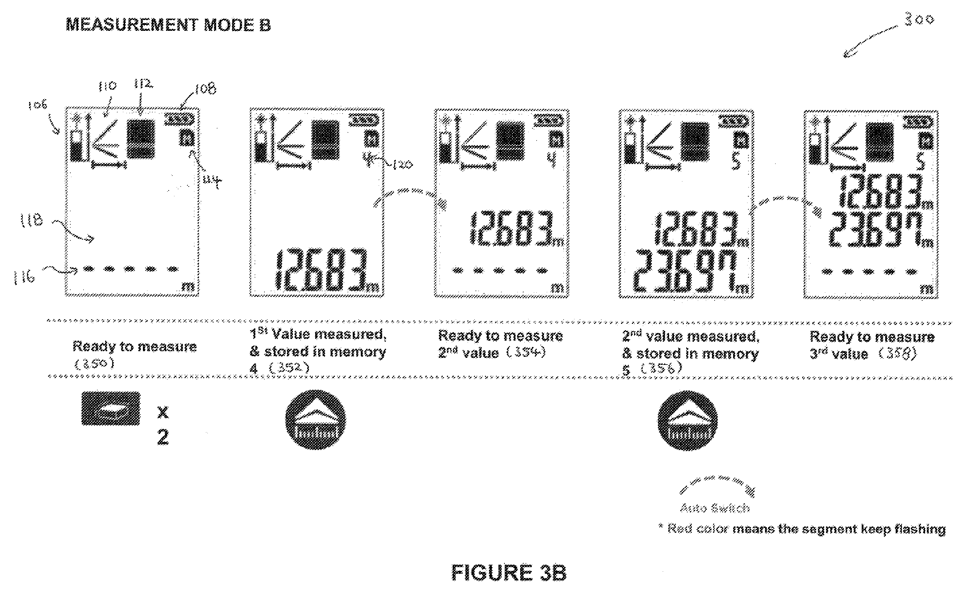

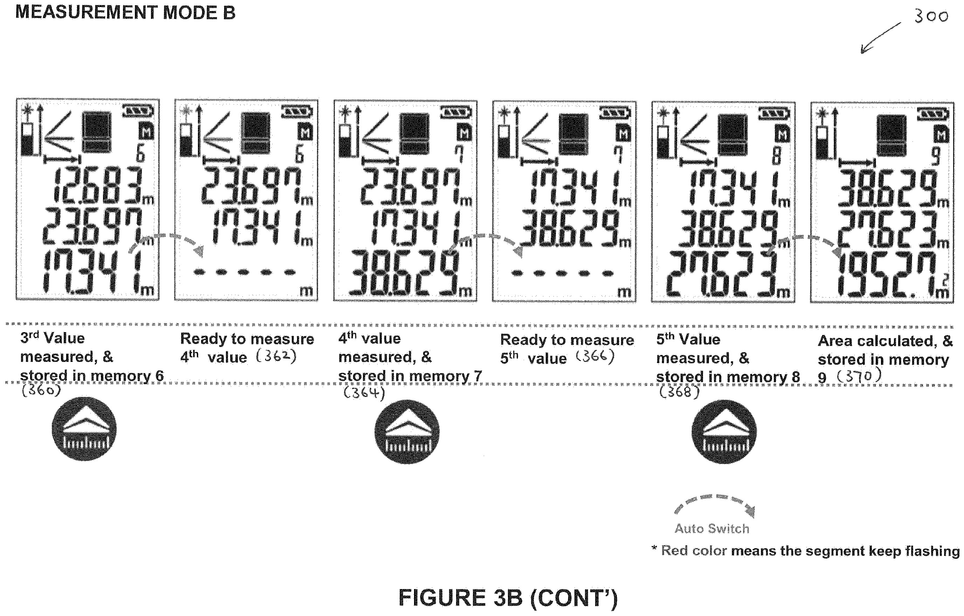

Figure 3B shows the operation of the signal generating device during the measurement process 300 in the measurement mode of Figure 3A. The operation processes 300 shown in Figure 3B is similar to that described above with reference to Figure 1.

In this measurement mode, the user first powers on the device 102. Then, as shown in (350), the user selects the measurement mode of Figure 3A using an actuating means of the device 102. In some case, the display 106 may be touch-sensitive and no actuators are provided on the device 102. After selecting the desired measurement mode, the measurement mode indicator 110 will guide the user to measure a first distance 302 between the device 102 and the center point of the target surface 104. The user actuates the device 102 and transmits laser signals to the center point of the target surface 104. The device 102 then receives the signal reflected back from the center point of the target surface 104 and determines the first distance 302 between the device 102 and the center point of the target surface 104. Preferably, as shown in (352), the value of the first distance 302 is displayed in the display column 116 and is stored in the memory of the device 102.

When the device 102 is ready to take the second measurement as shown in (354), the display column 116 will be cleared and the first value will be moved to the memory column 118 for display. Then, the measurement mode indicator 110 indicates the user to measure a second distance 304 between the device 102 and the point on the top edge of the target surface 104 that is vertically aligned with the center point of the target surface 104. Upon determining the value of the second distance 304, the device 102 will display the second value in the display column 116 and the second value will be stored in the memory of the device 102. Preferably, in this process, the measurement indicator 112 is also updated to indicate the measurements that have been taken.

As shown in Figure 3B, the above process repeats from (356)-(368) until the device 102 is able to determine all the five values of with the distance 302 between the device 102 and the center point of the target surface 104 and the distances 304, 306, 308, 310 between the device 102 and the four points on the four edges of the target surface 104 in which the four points are vertically or horizontally aligned with the center point of the target surface 104. Preferably, these values are all stored in the memory of the device 102 and the memory count 120 is updated to confirm these changes. The device 102, after determining the last value of the distance as shown in (368), automatically calculates the area of the target surface 104 using formulas associated with the measurement method in this measurement mode. As shown in (370), the final calculated area of the target surface 104 is displayed in the display column 116 and is stored in the memory of the device 102.

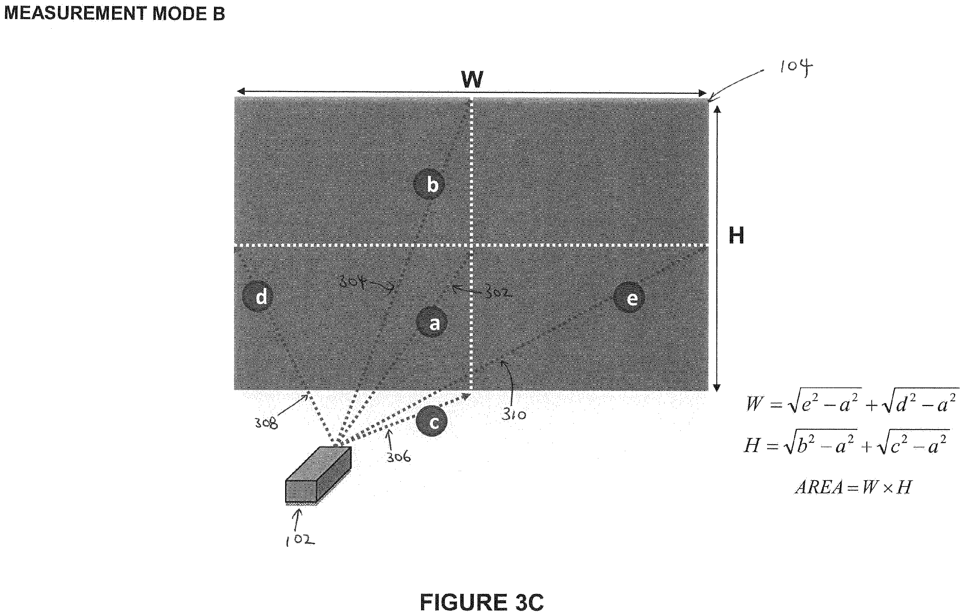

Figure 3C illustrates how the calculation of the area of the target surface 104 is performed in this measurement mode. In particular, the width and the height of the target surface 104 are calculated based on the following formulas:

$$W = \sqrt{e^2 - a^2} + \sqrt{d^2 - a^2}$$

$$H = \sqrt{b^2 - a^2} + \sqrt{c^2 - a^2}$$

wherein W is the width of the target surface 104, H is the height of the target surface 104, a is the distance 302 between the device 102 and a point on the target surface 104, b is the distance 304 between the device 102 and a point on the top edge of the target surface 104 that is vertically aligned with the point on the target surface 104, c is the distance 306 between the device 102 and a point on the bottom edge of the target surface 104 that is vertically aligned with the point on the target surface 104, d is the distance 308 between the device 102 and a point on the left edge of the target surface 104 that is horizontally aligned with the point on the target surface 104, and e is the distance 310 between the device 102 and a point on the right edge of the target surface 104 that is horizontally aligned with the point on the target surface 104. The area of the target surface 104 is calculated by multiplying the height and the width determined based on the five measurements and the formulas shown above.

Although this second measurement mode has been described in detail with reference to Figures 3A-3C, it should be noted that the layout on the display 106 and the information displayed on the display 106 in the different operation steps could be modified without departing from the measurement mode. For example, some of the features described with reference to Figures 1 may be incorporated to the present measurement mode. It should also be appreciated that the user may choose any point on the target surface 104 (not necessarily the center point) and four other points on the edges that are vertically and horizontally aligned with the chosen point in order to use this measurement mode to measure the target surface area. Also, the order of the five measurements can be freely chosen without affecting the calculation of the target surface area.

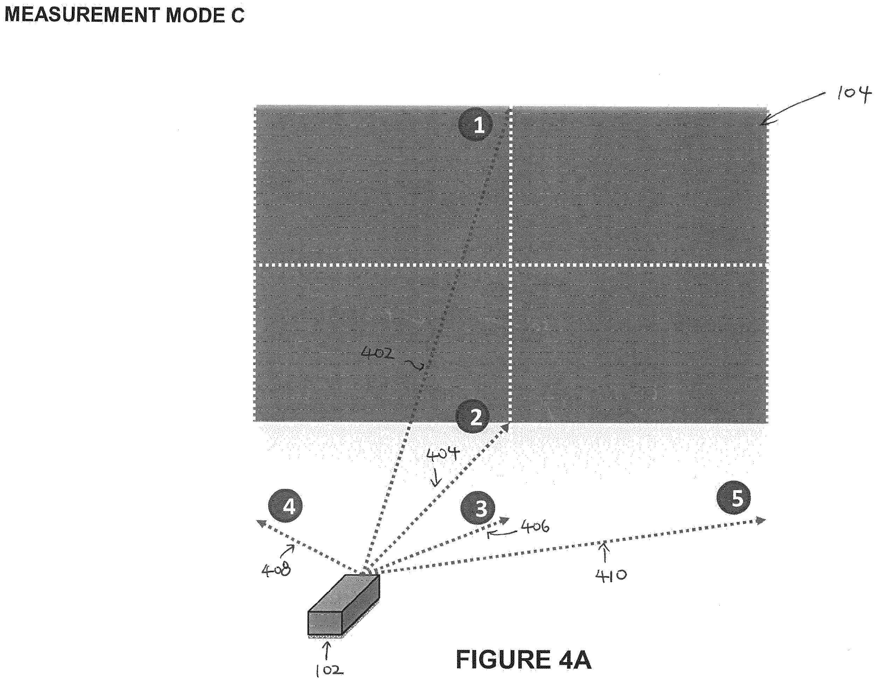

Referring now to Figures 4A-4C, there is shown an embodiment of the measurement mode of the signal generating device 102 of Figure 1. As shown in Figure 4A, in this measurement mode, five distance measurements between the device 102 and the target surface 104 or some points outside of the target surface 104 are required for calculating the area of the target surface 104. In this embodiment, preferably, the device 102 is placed in a position such that the line 406 of the third distance between the device 102 and lowest middle point outside of the target area 104 is substantially orthogonal to the target surface 104. In other embodiments, the device 102 may be placed in any positions as desired.

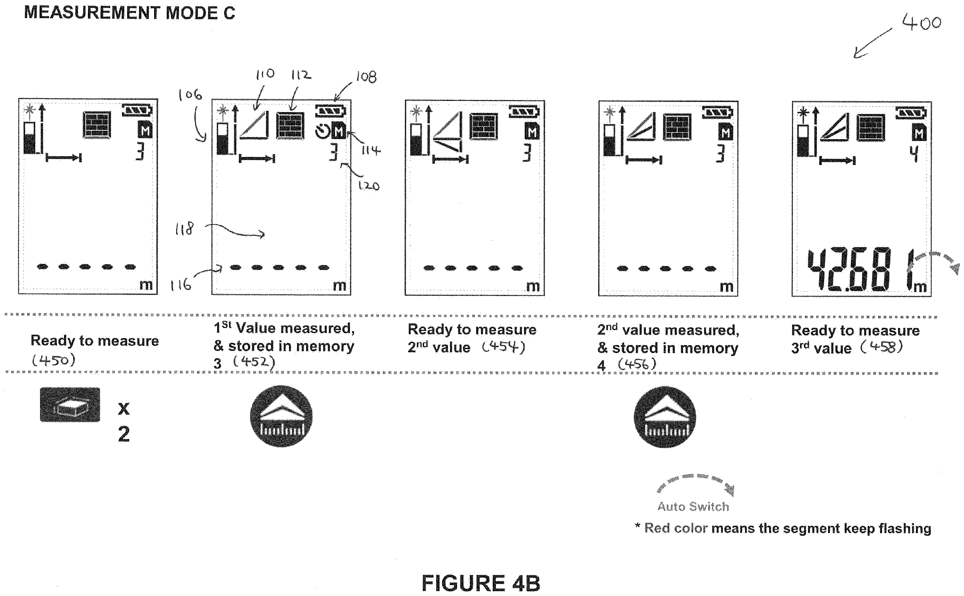

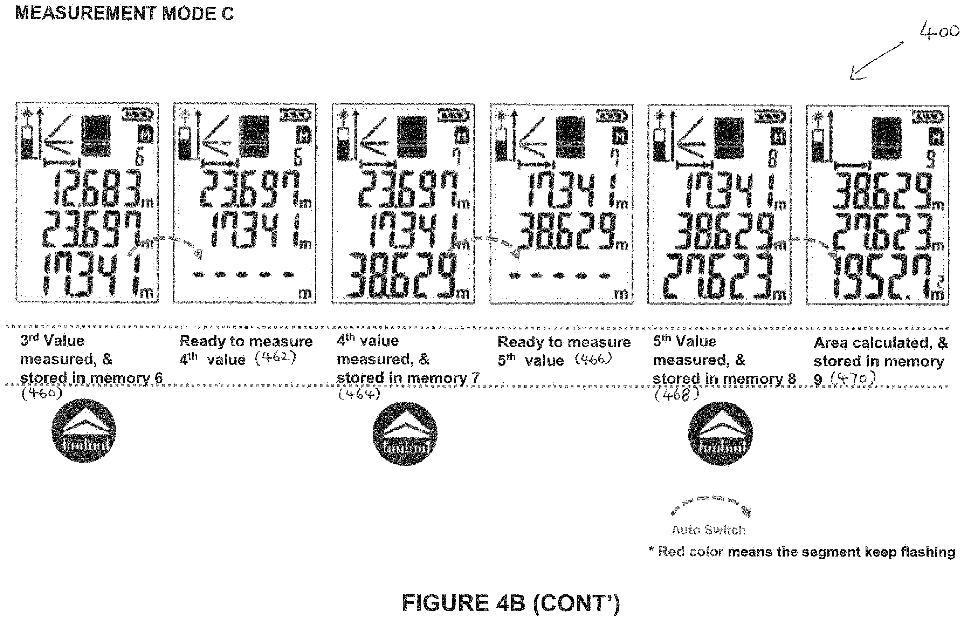

Figure 4B shows the operation of the signal generating device 102 during the measurement process 400 in the measurement mode of Figure 4A. The operation processes 400 shown in Figure 4B is similar to that described above with reference to Figure 1.

In this embodiment, the user first powers on the device 102. Then, as shown in (450), the user selects the measurement mode of Figure 4A using an actuating means of the device 102. In some case, the display 106 of the device 102 may be touch-sensitive and no actuators are provided on the device 102. After selecting the required measurement mode, the measurement mode indicator 110 will guide the user to measure a first distance 402 between the device 102 and a point on the top edge of the target surface 104. The user actuates the device 102 and transmits a laser signal to the point on the top edge of the target surface 104. The device 102 then receives the signal reflected back from the point on the top edge of the target surface 104 and determines the first distance 402 between the device 102 and the point on the top edge of the target surface 104. In one embodiment, as shown in (452), the value of the first distance 402 is stored in the memory but is not displayed in the display column 116 on the display 106. In some other embodiments, however, the value of the first distance 402 may be displayed. The memory count 120 may increase to confirm the successful storage of the value in the memory of the device 102. Afterwards, as shown in (454), the device 102 is ready for the next measurement.

Preferably, the measurement mode indicator 110 is updated and indicates the user to measure a second distance 404 between the device 102 and the point on the bottom edge of the target surface 104 that is vertically aligned with the point on the top edge of the target surface 104. Again, the device 102 transmits a laser signal for this measurement as described above. Upon determining the value of the second distance as shown in (456), the device 102 may or may not display the second value in the display column 116 and the second value will be stored in the memory.

Next, the measurement mode indicator 110 is updated and indicates the user to measure a third distance 406 between the device 102 and the point extending away from the bottom edge of the target surface 104 that is vertically aligned with the point on the bottom edge of the target surface 104. Preferably, the measurement indicator 112 is updated throughout the process to indicate the measurements that have been taken.

After the device 102 is ready for the next measurement as shown in (458), in subsequent steps (458)-(468), the measurement mode indicator 110 is updated and indicates the user to measure the fourth and fifth value 408, 410 that are the distances between the device 102 and the points that are horizontally aligned with the third point outside the target surface 104 and are vertically aligned with the left right edges of the target surface 104. All these values are determined by using laser pulses transmitted from the device 102 and the measurement results are displayed on the display column 116 of the device 102 and are stored in the memory. Preferably, the memory count 120 is updated after successful saving the values in the memory of the device 102. The device 102, after determining all the five distance values as shown in (470), automatically calculates the area of the target surface 104 using formulas associated with the measurement method of this embodiment. The final calculated value of the area of the target surface 104 is displayed on the display column 116 and is stored in the memory of the device 102.

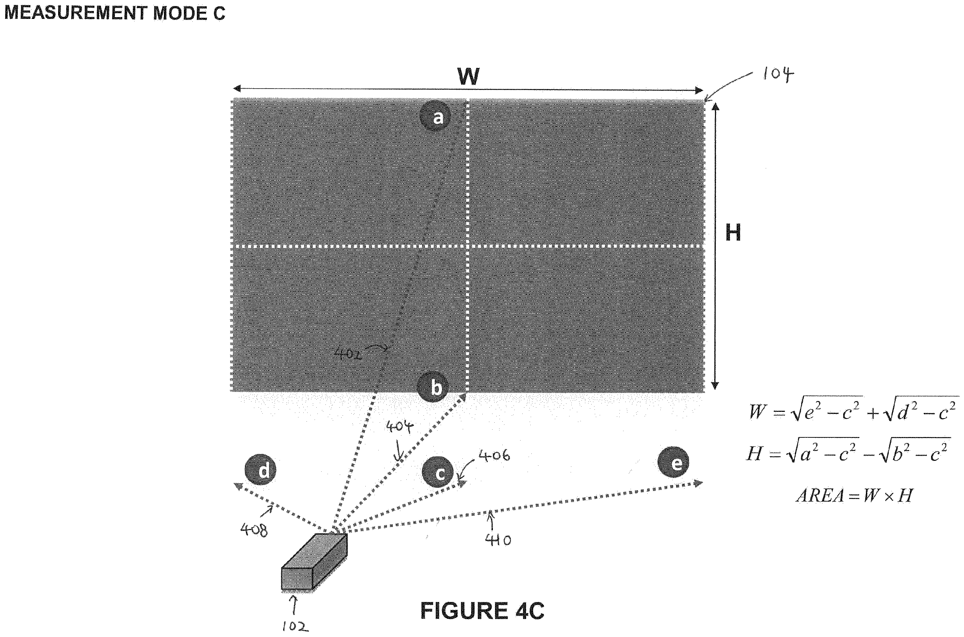

Figure 4C illustrates the formulas used in this measurement mode for calculating the area of the target surface 104. In particular, the width and the height of the target surface 104 are calculated based on the following formulas:

$$W = \sqrt{e^2 - c^2} + \sqrt{d^2 - c^2}$$

$$H = \sqrt{a^2 - c^2} - \sqrt{b^2 - c^2}$$

wherein W is the width of the target surface 104, H is the height of the target surface 104, a is the distance 402 between the device 102 and a point on the top edge of the target surface 104, b is the distance 404 between the device 102 and a point on the bottom edge of the target surface 104 that is vertically aligned with the point on the top edge of the target surface 104, c is the distance 406 between the device 102 and a point extending away from the bottom edge of the target surface 104 (outside the target surface 104) that is vertically aligned with the point on the bottom edge of the target surface 104, d is the distance 408 between the device 102 and a point horizontally aligned with the point of c outside the target surface 104 and vertically aligned with the left edge of the target surface 104, and e is the distance 410 between the device 102 and a point horizontally aligned with the point of c outside the target surface 104 and vertically aligned with the right edge of the target surface 104. The area of the target surface 104 is calculated by multiplying the height and the width determined based on the five measurements and the formulas shown above.

Although this embodiment has been described in detail with reference to Figures 4A-4C, it should be noted that the layout on the display 106 and the information displayed on the display 106 in the different operation steps could be modified without departing from the present invention. For example, some of the features described with reference to Figures 1 may be incorporated to the present embodiment. It should also be appreciated that the user may choose any point outside the target surface and four other points that are vertically and horizontally aligned with that point in order to use this measurement mode to measure the target surface area. Also, the order of the five measurements can be freely chosen without affecting the calculation of the target surface area.

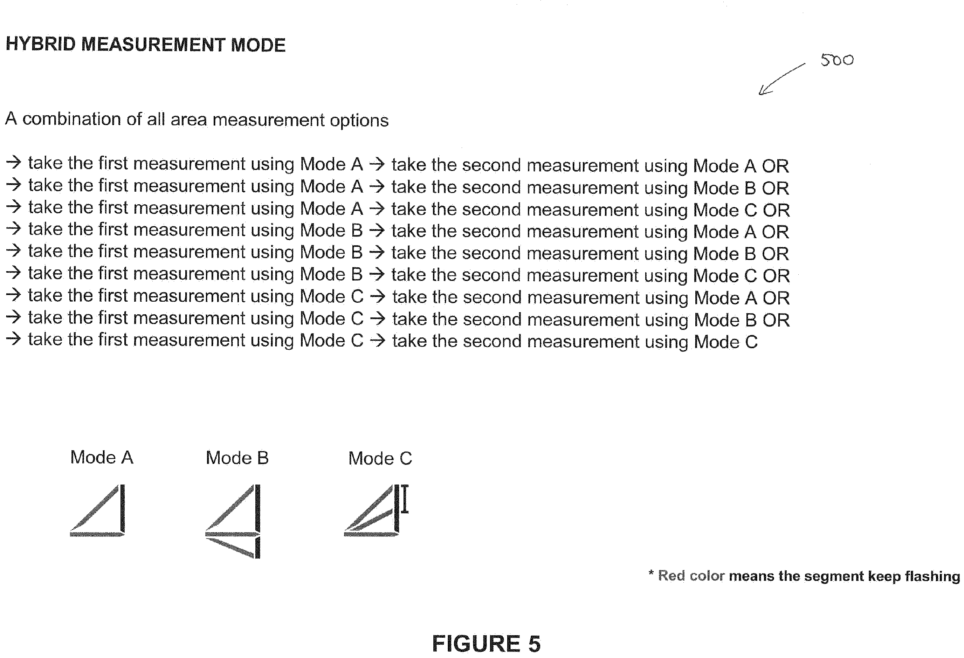

With reference to Figure 5, there is shown a hybrid measurement mode 500 in accordance with an embodiment of the present invention. In this embodiment, the device 102 may be arranged to measure the same targeted area based on measurements taken using different measurement modes (more than one measurement mode). In one embodiment, the different measurement modes may include the measurement mode of the embodiment of Figures 2A-C (mode A), the measurement mode of the embodiment of Figures 3A-C (mode B) and the measurement mode of the embodiment of Figures 4A-C (mode C). Addition measurement modes are possible in other embodiments. In one particular example, the device 102 may be arranged to measure the height or width of the targeted area 104 using one of the measurement modes whilst the other of the height or width of the targeted area 104 using another one of the measurement modes. In one preferred embodiment, the device 102 is operable to calculate the area of the target surface 104 using measurements obtained from different measurement methods/modes.

The above embodiment of the present invention is particular advantageous in that the measurement of the area of the target surface can be performed without requiring a direct measurement of the geometry of the target surface, which is often hard to obtain. Other advantages of the present invention in terms of cost, manufacturing ease, accuracy, efficiency and effectiveness, will become apparent with reference to the above text. It should be noted that, however, the present invention is not limited by the measurement modes descried in the embodiments. The present invention is capable of other modification so as to measure area that is non planar by using alternative algorithms. In practice, all kinds of shapes of surface area could be measured using a signal generating device as described above.

It will be appreciated by persons skilled in the art that numerous variations and/or modifications may be made to the invention as shown in the specific embodiments without departing from the scope of the invention as defined by the claims. The present embodiments are, therefore, to be considered in all respects as illustrative and not restrictive.

Any reference to prior art contained herein is not to be taken as an admission that the information is common general knowledge, unless otherwise indicated.

**Claims**

1. A method for measuring an area of a target surface (104) having the form of a parallelogram, the method comprising:

    generating and transmitting a plurality of measurement signals from a signal generating device (102) to a plurality of points (1, 2) on the target surface (104) and a plurality of points (3, 4, 5) outside the target surface, wherein the plurality of points on the target surface and the plurality of points outside the target surface together define a plane and comprise:

a first point (1) on a boundary of the target surface (104);

a second point (2) on a boundary of the target surface (104) opposite to and aligned with the first point (1);

third, fourth and fifth points (3, 4, 5) aligned linearly outside the target surface (104), the third point being arranged between the fourth and fifth points and aligned linearly with the first and second points (1, 2);

the first and second points (1, 2) spanning one of a width (W) and a height (H) of the target surface (104); and,

the third, fourth and fifth points (3, 4, 5) spanning the other of the width (W) and the height (H) of the target surface (104);

receiving respective measurement signals reflected from each of the plurality of points on the target surface (104) and the plurality of points outside the target surface (104), wherein the signal generating device (102) is arranged substantially orthogonally to the plane from the third point (3);

determining a respective distance (402, 404, 406, 408, 410) between the signal generating device (102) and each of the plurality of points (1, 2) on the target surface (104) and the plurality of points (3, 4, 5) outside the target surface (104);

deriving, automatically, a plurality of parameters associated with a geometry of the area of the target surface (104) based on the determined distances (402, 404, 406, 408, 410); and

calculating, automatically, the area of the target surface (104) using the plurality of parameters derived.

2. A method in accordance with claim 1, wherein the signal generating device (102) is operable in a plurality of measurement modes, and each of the plurality of measurement modes are associated with a different target surface area measurement method and are arranged to determine the plurality of parameters associated with the geometry of the area of the target surface (104) to be measured; and wherein the signal generating device (102) is initial arranged to operate in a default measurement mode.

3. A method in accordance with claim 2, further comprising the step of:

selecting, using a selection means of the signal generating device (102), a measurement mode different from the default measurement mode from the plurality of measurement modes prior to transmitting the plurality of measurement signals when a desired target surface area measurement method is different from a default target surface area measurement method associated with the default measurement mode.

4. A method in accordance with any one of the preceding claims, further comprising the steps of:

displaying each of the plurality of parameters derived on a display means (106) of the signal generating device (102) after deriving each of the plurality of parameters at the signal generating device (102);

displaying the calculated area of the target surface (104) on a display means (106) of the signal generating device (102) after calculating the area of the target surface (104);

displaying a power indicator (108) indicating a power status of the signal generating device (102) on a display means (106) of the signal generating device (102);

displaying a measurement mode indicator (110) indicating the measurement mode selected on a display means (106) of the signal generating device (102); and

displaying a measurement guidance indicator (112) arranged to indicate one or more parameters associated with the geometry of the area of the target surface (104) that have been measured.

5. A method in accordance with any one of the preceding claims, further comprising the steps of:

storing each of the plurality of parameters derived in a memory module of the signal generating device (102) after deriving each of the plurality of parameters at the signal generating device (102); and

storing the calculated area of the target surface (104) in a memory module of the signal generating device (102) after calculating the area of the target surface (104).

6. A method in accordance with claim 4, wherein the measurement mode indicator (110) is further arranged to indicate a parameter associated with the geometry of the area of the target surface (104) to be measured on a display means (106) of the signal generating device (102) each time prior to transmitting each of the plurality of measurement signals from the signal generating device (102) to the plurality of points on or outside the target surface (104).

7. A method in accordance with claim 6, wherein the measurement mode indicator (110) is updated based on an algorithm of the measurement mode selected each time prior to transmitting each of the plurality of measurement signals from the signal generating device (102) to the plurality of points on or outside the target surface (104).

**8.** A method in accordance with claim 3, further comprising the step of:

selecting a measurement mode from the plurality of measurement modes each time prior to transmitting a measurement signal from the signal generating device (102) to a point on the target surface (104).

**9.** A method in accordance with any one of the preceding claims, wherein the target surface (104) is a surface of a wall.

**10.** A method in accordance with any one of the preceding claims, wherein the area is rectangular or squared.

**11.** A method in accordance with any one of the preceding claims, wherein the signal generating device (102) is a laser generating device arranged to generate, transmit and receive the measurement signals in the form of laser measurement signals.

**12.** A method in accordance with any one of the preceding claims, wherein the plurality of parameters associated with the geometry of the area of the target surface (104) comprises at least one of a height, a partial height, an extended height, a width, a partial width, an extended width, a hypotenuse or a partial hypotenuse of the target surface (104).

**13.** A method in accordance with any one of the preceding claims, wherein generating and transmitting the plurality of measurement signals from the signal generating device (102) to the plurality of points (1, 2) on the target surface (104) and the plurality of points outside the target surface (3, 4, 5) is carried out in sequence.

**14.** A signal generating device for measuring an area of a target surface (104) having the form of a parallelogram, the device comprising:

a generator and a transceiver adapted to, respectively, generate and transmit a plurality of measurement signals to a plurality of points (1, 2) on the target surface (104) and a plurality of points (3, 4, 5) outside the target surface, wherein the plurality of points on the target surface and the plurality of points outside the target surface together define a plane and comprise:

a first point (1) on a boundary of the target surface (104);
a second point (2) on a boundary of the target surface (104) opposite to and aligned with the first point (1);
third, fourth and fifth points (3, 4, 5) aligned linearly outside the target surface (104), the third point being arranged between the fourth and fifth points and aligned linearly with the first and second points (1, 2);
the first and second points (1, 2) spanning one of a width (W) and a height (H) of the target surface (104); and,
the third, fourth and fifth points (3, 4, 5) spanning the other of the width (W) and the height (H) of the target surface (104);

the transceiver being also adapted to receive respective measurement signals reflected from each of the plurality of points on the target surface (104) and the plurality of points outside the target surface (104); and
a processor arranged to determine a respective distance (402, 404, 406, 408, 410) between the signal generating device (102) and each of the plurality of points (1, 2) on the target surface (104) and the plurality of points (3, 4, 5) outside the target surface (104);
wherein the processor is also arranged to derive, automatically, a plurality of parameters associated with a geometry of the area of the target surface (104) based on the determined distances (402, 404, 406, 408, 410); and
wherein the processor is also arranged to calculate, automatically, the area of the target surface (104) using the plurality of parameters derived.

**Patentansprüche**

**1.** Verfahren zum Messen eines Inhalts einer Zielfläche (104), die die Form eines Parallelogramms aufweist, wobei das Verfahren Folgendes umfasst:

Erzeugen und Übertragen einer Vielzahl von Messsignalen von einer Signalerzeugungsvorrichtung (102) zu einer Vielzahl von Punkten (1, 2) auf der Zielfläche (104) und einer Vielzahl von Punkten (3, 4, 5) außerhalb der Zielfläche, wobei die Vielzahl von Punkten auf der Zielfläche und die Vielzahl von Punkten außerhalb der Zielfläche zusammen eine Ebene definieren und Folgendes umfassen:

einen ersten Punkt (1) an einer Grenze der Zielfläche (104);
einen zweiten Punkt (2) an einer Grenze der Zielfläche (104), der dem ersten Punkt (1) gegenüberliegt und auf diesen ausgerichtet ist;

einen dritten, vierten und fünften Punkt (3, 4, 5), die außerhalb der Zielfläche (104) linear ausgerichtet sind, wobei der dritte Punkt zwischen dem vierten und dem fünften Punkt angeordnet und auf den ersten und den zweiten Punkt (1, 2) linear ausgerichtet ist;

wobei der erste und der zweite Punkt (1, 2) eines einer Breite (W) und einer Höhe (H) der Zielfläche (104) überspannen und wobei der dritte, vierte und fünfte Punkt (3, 4, 5) die andere der Breite (W) und der Höhe (H) der Zielfläche (104) überspannen;

Empfangen von jeweiligen Messsignalen, die von jedem der Vielzahl von Punkten auf der Zielfläche (104) und der Vielzahl von Punkten außerhalb der Zielfläche (104) reflektiert werden, wobei die Signalerzeugungsvorrichtung (102) im Wesentlichen orthogonal zur Ebene vom dritten Punkt (3) angeordnet ist;

Bestimmen eines jeweiligen Abstandes (402, 404, 406, 408, 410) zwischen der Signalerzeugungsvorrichtung (102) und jedem der Vielzahl von Punkten (1, 2) auf der Zielfläche (104) und der Vielzahl von Punkten (3, 4, 5) außerhalb der Zielfläche (104);

automatisches Ableiten auf Basis der bestimmten Abstände (402, 404, 406, 408, 410) einer Vielzahl von Parametern, die mit einer Geometrie des Inhalts der Zielfläche (104) verknüpft sind; und

automatisches Berechnen des Inhalts der Zielfläche (104) unter Verwendung der Vielzahl von abgeleiteten Parametern.

2. Verfahren nach Anspruch 1, wobei die Signalerzeugungsvorrichtung (102) in einer Vielzahl von Messmodi betreibbar ist und jeder der Vielzahl von Messmodi mit einem anderen Zielflächeninhaltsmessverfahren verknüpft und angeordnet ist, um die Vielzahl von Parametern zu bestimmen, die mit der Geometrie des zu messenden Inhalts der Zielfläche (104) verknüpft sind; und wobei die Signalerzeugungsvorrichtung (102) anfänglich angeordnet ist, um in einem Standardmessverfahren betrieben zu werden.

3. Verfahren nach Anspruch 2, das ferner den folgenden Schritt umfasst:

Auswählen, unter Verwendung eines Auswahlmittels der Signalerzeugungsvorrichtung (102), eines Messmodus, der sich vom Standardmessmodus unterscheidet, aus der Vielzahl von Messmodi vor der Übertragung der Vielzahl von Messsignalen, wenn ein gewünschtes Zielflächeninhaltsmessverfahren von einem standardmäßigen Zielflächeninhaltsmessverfahren, das mit dem Standardmessmodus verknüpft ist, abweicht.

4. Verfahren nach einem der vorhergehenden Ansprüche, das ferner die folgenden Schritte umfasst:

Anzeigen jedes der Vielzahl von abgeleiteten Parametern auf einem Anzeigemittel (106) der Signalerzeugungsvorrichtung (102) nach Ableiten jedes der Vielzahl von Parametern an der Signalerzeugungsvorrichtung (102);

Anzeigen des berechneten Inhalts der Zielfläche (104) auf einem Anzeigemittel (106) der Signalerzeugungsvorrichtung (102) nach Berechnen des Inhalts der Zielfläche (104);

Anzeigen eines Leistungsindikators (108), der einen Leistungsstatus der Signalerzeugungsvorrichtung (102) angibt, auf einem Anzeigemittel (106) der Signalerzeugungsvorrichtung (102);

Anzeigen eines Messmodusindikators (110), der den ausgewählten Messmodus angibt, auf einem Anzeigemittel (106) der Signalerzeugungsvorrichtung (102) und

Anzeigen eines Messführungsindikators (112), der angeordnet ist, um einen oder mehrere Parameter, die mit der Geometrie des Inhalts der Zielfläche (104) verknüpft sind und die gemessen wurden, anzugeben.

5. Verfahren nach einem der vorhergehenden Ansprüche, das ferner die folgenden Schritte umfasst:

Speichern jedes der Vielzahl von abgeleiteten Parametern in einem Speichermodul der Signalerzeugungsvorrichtung (102) nach Ableiten jedes der Vielzahl von Parametern an der Signalerzeugungsvorrichtung (102) und

Speichern des berechneten Inhalts der Zielfläche (104) in einem Speichermodul der Signalerzeugungsvorrichtung (102) nach Berechnen des Inhalts der Zielfläche (104).

6. Verfahren nach Anspruch 4, wobei der Messmodusindikator (110) ferner angeordnet ist, um einen Parameter, der mit der Geometrie des zu messenden Inhalts der Zielfläche (104) verknüpft ist, jedes Mal auf einem Anzeigemittel (106) der Signalerzeugungsvorrichtung (102) anzugeben, bevor jedes der Vielzahl von Messsignalen von der Signalerzeugungsvorrichtung (102) zur Vielzahl von Punkten auf oder außerhalb der Zielfläche (104) übertragen wird.

7. Verfahren nach Anspruch 6, wobei der Messmodusindikator (110) auf Basis eines Algorithmus des Messmodus, der jedes Mal vor dem Übertragen jedes der Vielzahl von Messsignalen von der Signalerzeugungsvorrichtung (102) zur Vielzahl von Punkten auf oder außerhalb der Zielfläche (104) ausgewählt wird, aktualisiert wird.

8. Verfahren nach Anspruch 3, das ferner den folgenden Schritt umfasst:

Auswählen eines Messmodus aus der Vielzahl von Messmodi jedes Mal vor dem Übertragen eines Messsignals von der Signalerzeugungsvorrichtung (102) zu einem Punkt auf der Zielfläche (104).

9. Verfahren nach einem der vorhergehenden Ansprüche, wobei die Zielfläche (104) eine Fläche einer Wand ist.

10. Verfahren nach einem der vorhergehenden Ansprüche, wobei der Inhalt rechteckig oder quadratisch ist.

11. Verfahren nach einem der vorhergehenden Ansprüche, wobei die Signalerzeugungsvorrichtung (102) eine Lasererzeugungsvorrichtung ist, die angeordnet ist, um die Messsignale in Form von Lasermesssignalen zu erzeugen, zu übertragen und zu empfangen.

12. Verfahren nach einem der vorhergehenden Ansprüche, wobei die Vielzahl von Parametern, die mit der Geometrie des Inhalts der Zielfläche (104) verknüpft sind, mindestens eines einer Höhe, einer teilweisen Höhe, einer erweiterten Höhe, einer Breite, einer teilweisen Breite, einer erweiterten Breite, einer Hypotenuse oder einer teilweisen Hypotenuse der Zielfläche (104) umfasst.

13. Verfahren nach einem der vorhergehenden Ansprüche, wobei das Erzeugen und Übertragen der Vielzahl von Messsignalen von der Signalerzeugungsvorrichtung (102) zur Vielzahl von Punkten (1, 2) auf der Zielfläche (104) und zur Vielzahl von Punkten (3, 4, 5) außerhalb der Zielfläche in Folge ausgeführt wird.

14. Signalerzeugungsvorrichtung zum Messen eines Inhalts einer Zielfläche (104), die die Form eines Parallelogramms aufweist, wobei die Vorrichtung Folgendes umfasst:

einen Erzeuger und einen Sendeempfänger, die angepasst sind, um eine Vielzahl von Messsignalen zu einer Vielzahl von Punkten (1, 2) auf der Zielfläche (104) und einer Vielzahl von Punkten (3, 4, 5) außerhalb der Zielfläche zu erzeugen bzw. zu übertragen, wobei die Vielzahl von Punkten auf der Zielfläche und die Vielzahl von Punkten außerhalb der Zielfläche zusammen eine Ebene definieren und Folgendes umfassen:

einen ersten Punkt (1) an einer Grenze der Zielfläche (104);
einen zweiten Punkt (2) an einer Grenze der Zielfläche (104), der dem ersten Punkt (1) gegenüberliegt und auf diesen ausgerichtet ist;
einen dritten, vierten und fünften Punkt (3, 4, 5), die außerhalb der Zielfläche (104) linear ausgerichtet sind, wobei der dritte Punkt zwischen dem vierten und dem fünften Punkt angeordnet und auf den ersten und den zweiten Punkt (1, 2) linear ausgerichtet ist;
wobei der erste und der zweite Punkt (1,2) eines einer Breite (W) und einer Höhe (H) der Zielfläche (104) überspannen und
wobei der dritte, vierte und fünfte Punkt (3, 4, 5) die andere der Breite (W) und der Höhe (H) der Zielfläche (104) überspannen;
wobei der Sendeempfänger auch angepasst ist, um jeweilige Messsignale, die von jedem der Vielzahl von Punkten auf der Zielfläche (104) und der Vielzahl von Punkten außerhalb der Zielfläche (104) reflektiert werden, zu empfangen; und
einen Prozessor, der angepasst ist, um einen jeweiligen Abstand (402, 404, 406, 408, 410) zwischen der Signalerzeugungsvorrichtung (102) und jedem der Vielzahl von Punkten (1, 2) auf der Zielfläche (104) und der Vielzahl von Punkten (3, 4, 5) außerhalb der Zielfläche (104) zu bestimmen;
wobei der Prozessor auch angepasst ist, um auf Basis der bestimmten Abstände (402, 404, 406, 408, 410) eine Vielzahl von Parametern, die mit einer Geometrie des Inhalts der Zielfläche (104) verknüpft sind, automatisch abzuleiten; und
wobei der Prozessor auch angeordnet ist, um den Inhalt der Zielfläche (104) unter Verwendung der Vielzahl von abgeleiteten Parametern automatisch zu berechnen.

## Revendications

1. Procédé pour mesurer une aire d'une surface cible (104) qui présente la forme d'un parallélogramme, le procédé comprenant :

la génération et la transmission d'une pluralité de signaux de mesure d'un dispositif de génération de signal (102) à une pluralité de points (1, 2) sur la surface cible (104) et à une pluralité de points (3, 4, 5) à l'extérieur de la surface cible, dans lequel la pluralité de points sur la surface cible et la pluralité de points à l'extérieur de la surface cible définissent ensemble un plan et comprennent :

un premier point (1) sur une frontière de la surface cible (104) ;
un deuxième point (2) sur une frontière de la surface cible (104) opposé au premier point (1) et qui est aligné avec ce premier point ;
des troisième, quatrième et cinquième points (3, 4, 5) alignés linéairement à l'extérieur de la surface cible (104), le troisième point étant agencé entre les quatrième et cinquième points et aligné linéairement avec les premier et deuxième points (1, 2) ;
les premier et deuxième points (1, 2) s'étendant sur l'une parmi une largeur (W) et une hauteur (H) de la surface cible (104) ; et
les troisième, quatrième et cinquième points (3, 4, 5) s'étendant sur l'autre parmi la largeur (W) et la hauteur (H) de la surface cible (104) ;

la réception de signaux de mesure respectifs qui sont réfléchis depuis chacun de la pluralité de points sur la surface cible (104) et de la pluralité de points à l'extérieur de la surface cible (104), dans lequel le dispositif de génération de signal (102) est agencé sensiblement perpendiculairement au plan par rapport au troisième point (3) ;
la détermination d'une distance respective (402, 404, 406, 408, 410) entre le dispositif de génération de signal (102) et chacun de la pluralité de points (1, 2) sur la surface cible (104) et de la pluralité de points (3, 4, 5) à l'extérieur de la surface cible (104) ;
la dérivation automatique d'une pluralité de paramètres qui sont associés à une géométrie de l'aire de la surface cible (104) sur la base des distances déterminées (402, 404, 406, 408, 410) ; et
le calcul automatique de l'aire de la surface cible (104) en utilisant la pluralité de paramètres dérivés.

**2.** Procédé selon la revendication 1, dans lequel le dispositif de génération de signal (102) peut fonctionner dans une pluralité de modes de mesure, et chacun de la pluralité de modes de mesure est associé à un procédé de mesure d'aire de surface cible différent et est agencé de manière à ce qu'il détermine la pluralité de paramètres associés à la géométrie de l'aire de la surface cible (104) destinée à être mesurée ; et dans lequel le dispositif de génération de signal (102) est agencé initialement de manière à fonctionner dans un mode de mesure par défaut.

**3.** Procédé selon la revendication 2, comprenant en outre l'étape consistant à :

sélectionner, en utilisant un moyen de sélection du dispositif de génération de signal (102), un mode de mesure différent du mode de mesure par défaut parmi la pluralité de modes de mesure avant la transmission de la pluralité de signaux de mesure lorsqu'un procédé de mesure d'aire de surface cible souhaité est différent d'un procédé de mesure d'aire de surface cible par défaut associé au mode de mesure par défaut.

**4.** Procédé selon l'une quelconque des revendications précédentes, comprenant en outre les étapes consistant à :

afficher chacun de la pluralité de paramètres dérivés sur un moyen d'affichage (106) du dispositif de génération de signal (102) après la dérivation de chacun de la pluralité de paramètres au niveau du dispositif de génération de signal (102) ;
afficher l'aire calculée de la surface cible (104) sur un moyen d'affichage (106) du dispositif de génération de signal (102) après le calcul de l'aire de la surface cible (104) ;
afficher un indicateur de puissance (108) qui indique un état de puissance du dispositif de génération de signal (102) sur un moyen d'affichage (106) du dispositif de génération de signal (102) ;
afficher un indicateur de mode de mesure (110) qui indique le mode de mesure sélectionné sur un moyen d'affichage (106) du dispositif de génération de signal (102) ; et
afficher un indicateur de guidage de mesure (112) agencé de manière à indiquer un ou plusieurs paramètres associés à la géométrie de l'aire de la surface cible (104) qui a été mesurée.

**5.** Procédé selon l'une quelconque des revendications précédentes, comprenant en outre les étapes consistant à :

stocker chacun de la pluralité de paramètres dérivés dans un module de mémoire du dispositif de génération de signal (102) après la dérivation de chacun de la pluralité de paramètres au niveau du dispositif de génération de signal (102) ; et
stocker l'aire calculée de la surface cible (104) dans un module de mémoire du dispositif de génération de signal (102) après le calcul de l'aire de la surface cible (104).

**6.** Procédé selon la revendication 4, dans lequel l'indicateur de mode de mesure (110) est en outre agencé de manière à indiquer un paramètre associé à la géométrie de l'aire de la surface cible (104) qui est destinée à être mesurée sur un moyen d'affichage (106) du dispositif de génération de signal (102) chaque fois avant la transmission de chacun de la pluralité de signaux de mesure du dispositif de génération de signal (102) à la pluralité de points sur ou à l'extérieur de la surface cible (104).

**7.** Procédé selon la revendication 6, dans lequel l'indicateur de mode de mesure (110) est mis à jour sur la base d'un algorithme du mode de mesure sélectionné chaque fois avant la transmission de chacun de la pluralité de signaux de mesure du dispositif de génération de signal (102) à la pluralité de points sur ou à l'extérieur de la surface cible (104).

**8.** Procédé selon la revendication 3, comprenant en outre l'étape consistant à :

sélectionner un mode de mesure parmi la pluralité de modes de mesure chaque fois avant la transmission d'un signal de mesure du dispositif de génération de signal (102) à un point sur la surface cible (104).

**9.** Procédé selon l'une quelconque des revendications précédentes, dans lequel la surface cible (104) est une surface d'une paroi.

**10.** Procédé selon l'une quelconque des revendications précédentes, dans lequel l'aire est rectangulaire ou carrée.

**11.** Procédé selon l'une quelconque des revendications précédentes, dans lequel le dispositif de génération de signal (102) est un dispositif de génération laser qui est agencé de manière à générer, transmettre et recevoir les signaux de mesure sous la forme de signaux de mesure laser.

**12.** Procédé selon l'une quelconque des revendications précédentes, dans lequel les paramètres de la pluralité de paramètres associés à la géométrie de l'aire de la surface cible (104) comprennent au moins l'une parmi une hauteur, une hauteur partielle, une hauteur étendue, une largeur, une largeur partielle, une largeur étendue, une hypoténuse ou une hypoténuse partielle de la surface cible (104).

**13.** Procédé selon l'une quelconque des revendications précédentes, dans lequel la génération et la transmission de la pluralité de signaux de mesure du dispositif de génération de signal (102) à la pluralité de points (1, 2) sur la surface cible (104) et à la pluralité de points (3, 4, 5) à l'extérieur de la surface cible sont mises en oeuvre en séquence.

**14.** Dispositif de génération de signal pour mesurer une aire d'une surface cible (104) qui présente la forme d'un parallélogramme, le dispositif comprenant :

un générateur et un émetteur-récepteur adaptés de manière à générer respectivement transmettre une pluralité de signaux de mesure à une pluralité de points (1, 2) sur la surface cible (104) et à une pluralité de points (3, 4, 5) à l'extérieur de la surface cible, dans lequel la pluralité de points sur la surface cible et la pluralité de points à l'extérieur de la surface cible définissant ensemble un plan et comprennent :

un premier point (1) sur une frontière de la surface cible (104) ;
un deuxième point (2) sur une frontière de la surface cible (104) opposé au premier point (1) et qui est aligné avec ce premier point ;
des troisième, quatrième et cinquième points (3, 4, 5) alignés linéairement à l'extérieur de la surface cible (104), le troisième point étant agencé entre les quatrième et cinquième points et aligné linéairement avec les premier et deuxième points (1, 2) ;
les premier et deuxième points (1, 2) s'étendant sur l'une parmi une largeur (W) et une hauteur (H) de la surface cible (104) ; et
les troisième, quatrième et cinquième points (3, 4, 5) s'étendant sur l'autre parmi la largeur (W) et la hauteur (H) de la surface cible (104) ;

l'émetteur-récepteur étant également adapté de manière à recevoir des signaux de mesure respectifs qui sont réfléchis depuis chacun de la pluralité de points sur la surface cible (104) et de la pluralité de points à l'extérieur de la surface cible (104) ; et
un processeur qui est agencé de manière à déterminer une distance respective (402, 404, 406, 408, 410) entre le dispositif de génération de signal (102) et chacun de la pluralité de points (1, 2) sur la surface cible (104) et de la pluralité de points (3, 4, 5) à l'extérieur de la surface cible (104) ; dans lequel :

le processeur est également agencé de manière à dériver automatiquement une pluralité de paramètres associés à une géométrie de l'aire de la surface cible (104) sur la base des distances déterminées (402, 404, 406, 408, 410) ; et dans lequel :

le processeur étant également agencé de manière à calculer automatiquement l'aire de la surface cible (104) en utilisant la pluralité de paramètres dérivés.

# Area measurement using a Laser Generation Device

Ready to measure @ area mode. Ready to measure 1st value (150)

1st Value measured, & stored in memory 15 (152)

Ready to measure 2nd value (154)

2nd value measured, & stored in memory 16 (156)

Ready to measure 3rd value (158)

3rd value measured, & stored in memory 17 (160)

Area is calculated, & stored the value in memory 18 (162)

* Red color means the segment keep flashing

Auto Switch

## FIGURE 1

MEASUREMENT MODE A

FIGURE 2A

EP 2 863 175 B1

MEASUREMENT MODE A

*200*

Ready to measure height of wall @ wall area mode. (250)

Height of wall measured, & stored in memory 10 (252)

Ready to measure Width of wall (254)

Width of wall measured, & stored in memory 1 (256)

Wall area calculated, & stored in memory 2 (258)

Auto Switch

* Red color means the segment keep flashing

FIGURE 2B

EP 2 863 175 B1

$$W = \sqrt{c^2 - a^2}$$

$$H = \sqrt{b^2 - a^2}$$

$$AREA = W \times H$$

**FIGURE 2C**

MEASUREMENT MODE B

FIGURE 3A

MEASUREMENT MODE B

300

Ready to measure (350)

1st Value measured, & stored in memory 4 (352)

Ready to measure 2nd value (354)

2nd value measured, & stored in memory 5 (356)

Ready to measure 3rd value (358)

x 2

Auto Switch

* Red color means the segment keep flashing

FIGURE 3B

MEASUREMENT MODE B

300

3<sup>rd</sup> Value measured, & stored in memory 6 (360)

Ready to measure 4<sup>th</sup> value (362)

4<sup>th</sup> value measured, & stored in memory 7 (364)

Ready to measure 5<sup>th</sup> value (366)

5<sup>th</sup> Value measured, & stored in memory 8 (368)

Area calculated, & stored in memory 9 (370)

Auto Switch

* Red color means the segment keep flashing

**FIGURE 3B (CONT')**

EP 2 863 175 B1

24

MEASUREMENT MODE B

$$W = \sqrt{e^2 - a^2} + \sqrt{d^2 - a^2}$$

$$H = \sqrt{b^2 - a^2} + \sqrt{c^2 - a^2}$$

$$AREA = W \times H$$

FIGURE 3C

EP 2 863 175 B1

EP 2 863 175 B1

FIGURE 4A

# MEASUREMENT MODE C

400

106
110  112  108
114
120
118
116

| | | | | |
|---|---|---|---|---|
| Ready to measure (450) | 1st Value measured, & stored in memory 3 (452) | Ready to measure 2nd value (454) | 2nd value measured, & stored in memory 4 (456) | Ready to measure 3rd value (458) |

42.681 m

X 2

Auto Switch

* Red color means the segment keep flashing

## FIGURE 4B

EP 2 863 175 B1

27

MEASUREMENT MODE C

3rd Value measured, & stored in memory 6 (460)

Ready to measure 4th value (462)

4th value measured, & stored in memory 7 (464)

Ready to measure 5th value (466)

5th Value measured, & stored in memory 8 (468)

Area calculated, & stored in memory 9 (470)

Auto Switch

* Red color means the segment keep flashing

FIGURE 4B (CONT')

400

EP 2 863 175 B1

MEASUREMENT MODE C

FIGURE 4C

$$AREA = W \times H$$

$$H = \sqrt{a^2 - c^2} - \sqrt{b^2 - c^2}$$

$$W = \sqrt{e^2 - c^2} + \sqrt{d^2 - c^2}$$

## HYBRID MEASUREMENT MODE

*500*

A combination of all area measurement options

→ take the first measurement using Mode A → take the second measurement using Mode A OR
→ take the first measurement using Mode A → take the second measurement using Mode B OR
→ take the first measurement using Mode A → take the second measurement using Mode C OR
→ take the first measurement using Mode B → take the second measurement using Mode A OR
→ take the first measurement using Mode B → take the second measurement using Mode B OR
→ take the first measurement using Mode B → take the second measurement using Mode C OR
→ take the first measurement using Mode C → take the second measurement using Mode A OR
→ take the first measurement using Mode C → take the second measurement using Mode B OR
→ take the first measurement using Mode C → take the second measurement using Mode C

Mode A          Mode B          Mode C

* Red color means the segment keep flashing

## FIGURE 5

EP 2 863 175 B1

**EP 2 863 175 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2645056 A
- US 2008088817 A
- DE 19836812